# EUROPEAN PATENT SPECIFICATION

(11) **EP 3 835 253 B1**
(45) Date of publication and mention of the grant of the patent: **18.02.2026**
(21) Application number: 20212851.8
(22) Date of filing: 09.12.2020
(51) Int. Cl.: B66C 23/72, B66F 9/075, B66F 17/00, B66F 9/08, B66F 9/20, E02F 9/18, E02F 9/26, E02F 9/20, E02F 9/08

(54) **OPERATOR VEHICLE WITH ROTARY TOWER AND BALLAST**
BETRIEBSFAHRZEUG MIT DREHBAREM TURM UND BALLAST
VÉHICULE DE SERVICE AVEC TOUR PIVOTANTE ET LEST

(30) Priority: 11.12.2019 IT 201900023631
(43) Date of publication of application: 16.06.2021
(73) Proprietor: Manitou Italia S.r.l., 41013 Castelfranco Emilia (Modena) (IT)
(72) Inventor: IOTTI, Marco, 42123 REGGIO EMILIA (IT)
(74) Representative: Casadei, Giovanni

(56) References cited:
- EP-A1- 3 477 006
- CN-A- 106 219 447
- JP-A- H07 317 108
- KR-A- 20120 084 872
- US-A1- 2012 327 261

## Description

### DESCRIPTION

This invention relates to an operator vehicle comprising a platform equipped with movement means and a ballast equipped with a detection device.

More specifically, but not exclusively, the invention relates to a rotary tower equipped with ballast for an operator vehicle.

In the operator vehicles equipped with a rotary tower, use is made of a ballast for at least partly counterbalancing the weight of an apparatus, such as, for example, an operator arm or other tool, associated with the rotary tower itself, which also supports the operating cabin.

The rotary tower is provided with the possibility of rotating relative to the vehicle about a main axis, normally perpendicular to the supporting surface of the vehicle. The rotation available for the tower is typically a full and multiple circles, in both directions.

Since the operator arm or other tool associated with the rotary tower often has quite a significant weight, the ballast associated with the tower also has an equally significant weight, so as to provide a suitable balancing for the operator arm. The ballast, consequently, also has considerable dimensions, which must be taken into account during the rotation of the tower.

In fact, the ballast is normally located behind the driver's cab, in a position opposite the operator arm relative to the axis of rotation of the tower, protruding laterally to the driver's cab.

By performing the rotation of the tower, the operator must therefore ensure that the circular trajectory followed by the ballast is free from obstacles, so as not to produce impacts which could trigger dangerous oscillations of the tower and of the vehicle. On the other hand, the attention of the operator is directed mainly to the operator arm and the manoeuvring of the latter, so that the risk that the ballast can strike an obstacle cannot be excluded. Currently, there are no operator aids for controlling the trajectory followed by the ballast during rotation of the tower.

Exemples of prior art devices are disclosed in documents JPH07317108 and US2012327261. Both documents disclose a ballast weight provided with proximity sensors, adopted to produce a warning signal for the driver, in case the ballast weight approaches an obstacle. No direct control non rotation of the tower is performed, even in presence of a warning signal. Document JPH07317108 discloses the preamble of claim 1.

The aim of the invention is to provide an operator vehicle comprising a platform, equipped with movement means and with ballast which allows the above-mentioned drawback to be overcome, providing an aid to the operator for controlling the trajectory followed by the ballast.

Features and advantages of the invention are more apparent from the detailed description which follows of an embodiment of the invention according to the invention, illustrated by way of a non-limiting example in the accompanying drawings in which:

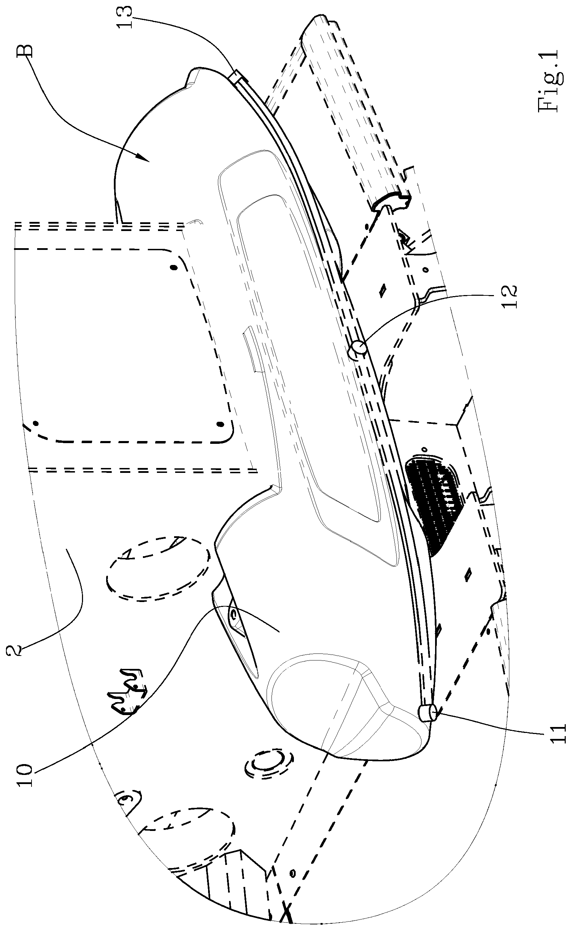

- Figure 1 is an isometric view of a ballast arrangement of the operator vehicle;
- Figure 2 is an isometric view of an operator vehicle equipped with a ballast according to the invention.

The ballast according to the invention comprises a main body (10), equipped with coupling means designed to allow a connection to the rotary tower of an operator vehicle.

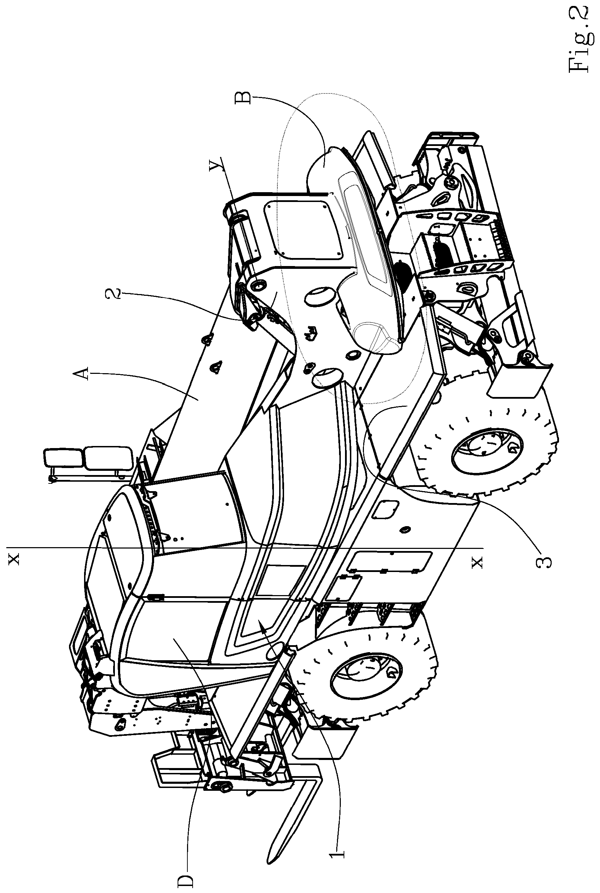

As shown in Figure 2, the operator vehicle comprises a platform (3), equipped with movement means, structured to allow the resting and the movement on a ground of the platform. In short, the platform (3) is the part of the vehicle which comprises the load-bearing frame, to which the means of movement, the motor and other devices for driving and controlling the vehicle are associated. Depending on the type of vehicle, the size and the tools supported, the platform (3) has different features, known in the trade. In Figure 2 the movement means consist of wheels, but according to other embodiments, known in the sector, the movement means could also comprise tracks and/or further wheels. The movement means are connected to a main motor, for receiving the drive force produced by the motor.

The operator vehicle is provided with a tower (1), equipped with a frame (2) connected to the platform (3) in a rotary fashion about a main axis (X). According to the non-limiting example embodiment illustrated, the tower (1) supports an apparatus (A), in the form of a telescopic arm, articulated to the frame (2) of the tower (1) about a horizontal axis of rotation (Y). In known manner, the telescopic arm can rotate about the horizontal axis (Y) to adopt different inclinations on a vertical plane. The tower (1) also carries a driving position (D) for an operator, equipped with the controls necessary for driving and operating the vehicle and the apparatus (A).

A rotary motor, of the type known in the sector, is designed for producing the rotation of the tower (1) relative to the platform (3) about the main axis (X); preferably, the rotary motor is of the hydraulic type and is driven by a distributor subject to the control signals sent by the control unit.

The ballast (B) according to the invention is associated with the frame (2) of the tower (1). According to the non-limiting example embodiment illustrated, the ballast (B) is associated with the frame (2) under the articulated end of the apparatus (A), that is, of the telescopic arm. The ballast (B) is located in a zone behind the driving position (D), that is to say, it is located behind the operator.

The ballast (B) comprises a detecting device (11, 12, 13), associated with the main body (10). The detecting device is designed for detecting the presence of an obstacle positioned at a distance which is less than a predetermined safety distance from the main body (10). Moreover, the detecting device is designed for emitting a proximity signal, indicating the presence of an obstacle at a distance which is less than the safety distance from the main body (10).

In short, the detecting device is able to perceive the presence of an obstacle which is closer to the main body (10) than a predetermined safety distance, and emit a corresponding signal, which may be transmitted directly to the operator, in the form of an acoustic or visual signal, and/or can be transmitted to a control unit, as described in more detail below. If, during the rotation of the tower (1), the ballast (B) moves closer to an obstacle than a predetermined safety distance, the detecting device emits the relative proximity signal. The proximity signal can be sent directly to the operator, who can slow down and/or stop the rotary motor, stopping the ballast before impact against the obstacle. Alternatively or in combination with the proximity signal transmitted to the operator, the proximity signal may be transmitted to the control unit, which can act on the rotary motor.

In particular, the operator vehicle is equipped with a control module, for example provided in the control unit, connected to the detecting device (11, 12, 13) and to the rotary motor, which is designed to transmit control signals to the above-mentioned distributor, in such a way that this drives the rotary motor as a function of the proximity signal emitted by the detecting device (11,12, 13). According to a preferred, non-limiting embodiment, the control module is set up to slow down and/or stop the rotary motor (through the distributor), in the presence of the proximity signal. In other words, the control module is able to slow down, and stop at the suitable moment, the rotation of the tower (1), acting on the distributor which in turn controls the rotary motor, to prevent the ballast (B) from striking the obstacle. This function is performed by the control module thanks to a suitable algorithm. The stopping of the rotation of the tower (1) is preceded by a slowing down suitable for preventing the triggering of oscillations.

According to a possible embodiment, the detecting device (11, 12, 13) comprises one or more proximity sensors. For example, the proximity sensors are ultrasound sensors or radar sensors. In any case, one skilled in the trade is able to select a proximity sensor who uses a technology suitable for the planned use. The proximity sensors are positioned in the most protruding zones of the main body (10). For example, according to the embodiment illustrated, the main body (10) has an ogival shape, elongate along a substantially horizontal direction. The detecting device comprises a sensor (12) located in a central or middle position of the main body (10), and two lateral sensors (11, 13), located at the ends of the main body (10). Obviously, the sensors face towards the outside of the vehicle.

Thanks to the ballast according to the invention, in both the presence of a control module and in the presence of a proximity signal transmitted directly in visual or acoustic form, the operator can calmly rotate the tower, concentrating mainly on the operation of the apparatus (A). This is because the detecting device, either directly, or indirectly through the control module, warns the operator of the presence of an obstacle along the trajectory of the ballast (B), allowing a timely stopping of the rotation of the tower, preceded by a slowing down suitable to prevent the triggering of oscillations.

## Claims

1. An operator vehicle, comprising:
a platform (3), equipped with movement means, structured to allow the resting and the movement on a ground of the platform;
a main motor connected to the movement means;
a tower (1), equipped with a frame (2) connected to the platform (3) in a rotary fashion about a main axis (X);
a rotary motor, designed to rotate the tower (1) relative to the platform (3) about the main axis (X);
a ballast (10), associated with the frame (2) of the tower (1);
wherein the Ballast comprises a main body (10), equipped with coupling means designed to allow a connection to the rotary tower, a detecting device (11, 12, 13), associated with the main body (10), designed for detecting the presence of an obstacle positioned at a distance less than a predetermined safety distance from the main body (10), and for emitting a proximity signal, signifying the presence of an obstacle at a distance less than the safety distance from the main body (10);
**characterized in that** it comprises a control module, connected to the detecting device (11, 12, 13) and to the rotary motor, which is designed to drive the rotary motor as a function of the proximity signal emitted by the detecting device (11, 12, 13), wherein the control module is designed to slow down and stop the relative motor in the presence of the proximity signal.

2. The operator vehicle according to the previous claim, wherein the detecting device (21, 22, 23) comprises one or more proximity sensors.

3. The operator vehicle according to claim 2, wherein the proximity sensors are ultrasound sensors or radar sensors.

## Patentansprüche

1. Arbeitsfahrzeug (im Titel "Betriebsfahrzeug" genannt), umfassend:
einen Unterwagen (3), der mit Fortbewegungsmitteln ausgestattet ist, die so konstruiert sind, dass sie das Abstellen und die Fortbewegung des Unterwagens auf einem Untergrund ermöglichen;
einen Hauptmotor, der mit den Fortbewegungsmitteln verbunden ist;
einen Oberwagen (1) (im Titel "Turm" genannt), der mit einem Rahmen (2) ausgestattet ist, der mit dem Unterwagen (3) um eine Hauptachse (X) drehbar verbunden ist;
einen Drehmotor, der dafür ausgelegt ist, den Oberwagen (1) relativ zu dem Unterwagen (3) um die Hauptachse (X) zu drehen;
einen Ballast (10), der mit dem Rahmen (2) des Oberwagens (1) verbunden ist;
wobei der Ballast einen Hauptkörper (10) umfasst, der mit Kupplungsmitteln ausgestattet ist, die dafür ausgelegt sind, eine Verbindung mit dem drehbaren Oberwagen zu ermöglichen, sowie eine Erkennungseinrichtung (11, 12, 13), die mit dem Hauptkörper (10) verbunden ist und dafür ausgelegt ist, das Vorhandensein eines Hindernisses zu erkennen, das sich in einem Abstand befindet, der kleiner ist als ein vorgegebener Sicherheitsabstand vom Hauptkörper (10), und
ein Näherungssignal auszugeben, welches das Vorhandensein eines Hindernisses in einem Abstand signalisiert, der kleiner ist als der Sicherheitsabstand vom Hauptkörper (10);
**dadurch gekennzeichnet, dass** es ein Steuermodul umfasst, das mit der Erkennungseinrichtung (11, 12, 13) und mit dem Drehmotor verbunden ist und dafür ausgelegt ist, den Drehmotor in Abhängigkeit von dem von der Erkennungseinrichtung (11, 12, 13) ausgegebenen Näherungssignal anzutreiben, wobei das Steuermodul dafür ausgelegt ist, den entsprechenden Motor bei Vorliegen des Näherungssignals zu verlangsamen und anzuhalten.

2. Arbeitsfahrzeug nach dem vorhergehenden Anspruch, wobei die Erkennungseinrichtung (21, 22, 23) einen oder mehrere Näherungssensoren umfasst.

3. Arbeitsfahrzeug nach Anspruch 2, wobei es sich bei den Näherungssensoren um Ultraschallsensoren oder Radarsensoren handelt.

## Revendications

1. Un véhicule de service, comprenant :
une plateforme (3), équipée de moyens de déplacement, structurés pour permettre l'appui et le déplacement sur un sol de la plateforme ;
un moteur principal relié aux moyens de déplacement ;
une tour (1), équipée d'un châssis (2) raccordé à la plateforme (3) de manière pivotante autour d'un axe principal (X) ;
un moteur rotatif, destiné à faire tourner la tour (1) par rapport à la plateforme (3) autour de l'axe principal (X) ;
un lest (10), associé au châssis (2) de la tour (1) ;
dans lequel le lest comprend un corps principal (10), équipé de moyens d'accouplement destinés à permettre un raccordement avec la tour pivotante, un dispositif de détection (11, 12, 13), associé au corps principal (10), destiné à détecter la présence d'un obstacle positionné à une distance inférieure à une distance de sécurité prédéfinie par rapport au corps principal (10), et à émettre un signal de proximité, indiquant la présence d'un obstacle à une distance inférieure à la distance de sécurité par rapport au corps principal (10) ;
**caractérisé en ce qu'**il comprend un module de contrôle, relié au dispositif de détection (11, 12, 13) et au moteur rotatif, qui est destiné à entraîner le moteur rotatif en fonction du signal de proximité émis par le dispositif de détection (11, 12, 13), dans lequel le module de contrôle est destiné à ralentir et arrêter le moteur correspondant en présence du signal de proximité.

2. Le véhicule de service selon la revendication précédente, dans lequel le dispositif de détection (21, 22, 23) comprend un ou plusieurs capteurs de proximité.

3. Le véhicule de service selon la revendication 2, dans lequel les capteurs de proximité sont des capteurs à ultrasons ou des capteurs radar.
